# EUROPÄISCHE PATENTSCHRIFT

(11) **EP 2 257 734 B1**
(45) Veröffentlichungstag und Bekanntmachung des Hinweises auf die Patenterteilung: **03.09.2014**
(21) Anmeldenummer: 09727429.4
(22) Anmeldetag: 30.03.2009
(51) Int. Cl.: F21V 7/00, F21Y 101/02

(54) **OPTISCHE ANORDNUNG FÜR LEUCHTE MIT PUNKTFÖRMIGER LICHTQUELLE UND ASYMMETRISCHER LICHTABSTRAHLCHARAKTERISTIK**
OPTICAL ASSEMBLY FOR LAMP HAVING A POINT-SHAPED LIGHT SOURCE AND ASYMMETRIC LIGHT-EMITTING CHARACTERISTIC
SYSTEME OPTIQUE POUR LAMPE À SOURCE LUMINEUSE PONCTUELLE ET À CARACTÉRISTIQUE DE RAYONNEMENT ASYMÉTRIQUE

(30) Priorität: 31.03.2008 DE 102008016496
(43) Veröffentlichungstag der Anmeldung: 08.12.2010
(73) Patentinhaber: Zumtobel Lighting GmbH, 6850 Dornbirn (AT)
(72) Erfinder: Keller, Katharina, 88131 Lindau (DE)
(74) Vertreter: Thun, Clemens
(86) Internationale Anmeldenummer: PCT/EP2009/002295
(87) Internationale Veröffentlichungsnummer: WO 2009/121538

(56) Entgegenhaltungen:
- EP-A1- 2 039 990
- WO-A1-2008/077338
- WO-A1-2008/122941
- WO-A1-2009/015605
- WO-A1-2009/046586
- JP-A- 2005 196 983
- US-A1- 2005 219 840
- US-A1- 2006 083 002

## Beschreibung

Die vorliegende Erfindung betrifft eine optische Anordnung gemäß dem Oberbegriff des Anspruchs 1, mit deren Hilfe eine asymmetrische Lichtabstrahlcharakteristik erzielt wird. Unter einer asymmetrischen Lichtabstrahlcharakteristik wird hierbei verstanden, dass die Erstreckung eines von der Leuchte abgegebenen Lichtkegels in einer ersten Richtung größer ist als in einer zu der ersten Richtung senkrecht verlaufenden zweiten Richtung.

Leuchten der oben beschriebenen Art werden insbesondere als Rettungswegleuchten eingesetzt. Die Leuchten werden hierbei bspw. an der Decke eines Raumes oder eines Gangs montiert und dienen im Notfall dazu, den darunter befindlichen Rettungsweg mit einem länglichen Lichtkegel auszuleuchten. Dabei ist es in der Regel erwünscht, mit Hilfe optischer Mittel das Licht verhältnismäßig weniger Lichtquellen derart umzusetzen, dass der angesprochene längliche Lichtkegel erzielt wird.

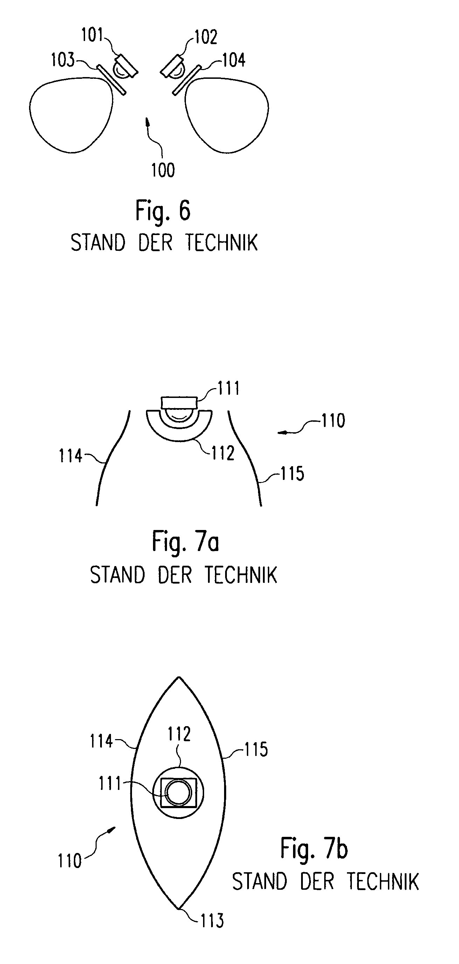

Aus dem Stand der Technik sind hierzu grundsätzlich zwei Lösungen bekannt, die in den Fig. 6 und 7a bzw. 7b dargestellt sind.

Bei der ersten Variante gemäß Fig. 6 sind entsprechend der schematischen Darstellung zwei punktförmige Lichtquellen - bspw. LEDs - 101 und 102 vorgesehen, welche in einem Winkel zueinander angeordnet sind und dementsprechend in jeweils verschiedene Richtungen Licht abstrahlen. Den Lichtquellen 101, 102 der Leuchte 100 können jeweils optische Element 103, 104 bspw. in Form von Linsen vorgeschaltet sein, über die dann letztendlich die gewünschte Lichtverteilung erzielt wird. Die Asymmetrie der Lichtabstrahlcharakteristik der Leuchte 100 wird allerdings in erster Linie durch die Nutzung zweier Lichtquellen erzielt.

Demgegenüber kommt bei der Leuchte 110 gemäß den Fig. 7a und 7b lediglich eine einzelne Lichtquelle 111 zum Einsatz. Diese ist von einer rotationssymmetrischen Linse 112 umgeben, über die zunächst eine gleichmäßige Aufweitung des von der Lichtquelle 111 abgegebenen Lichtbündels erzielt wird. Die Verformung dieses Lichtbündels zu einem asymmetrischen Lichtkegel wird dann mit Hilfe einer Reflektoranordnung 113 erzielt, welche aus jeweils zwei Reflektorhalbschalen 114, 115 gebildet ist, die entsprechend der Ansicht von Fig. 7b, welche die Unterseite der Leuchte 110 darstellt, zu einer Linsenform zusammengesetzt sind. Diese in den Fig. 7a und 7b dargestellte Konfiguration hat sich bewährt, da lediglich eine einzige Lichtquelle zum Einsatz kommt, allerdings führt sie zu verhältnismäßig großen Bauformen für die gesamte Leuchte.

Der vorliegenden Erfindung liegt deshalb die Aufgabe zugrunde, bislang bekannte Konzepte zur Realisierung einer asymmetrischen Lichtabstrahlcharakteristik derart weiter zu entwickeln, dass eine Leuchte mit optimalen lichttechnischen Eigenschaften erzielt wird, welche darüber hinaus allerdings auch in einer sehr kompakten Weise realisiert werden kann.

Die Aufgabe wird durch eine Leuchte mit den Merkmalen des Anspruchs 1 gelöst. Vorteilhafte Weiterbildungen der Erfindung sind Gegenstand der abhängigen Ansprüche.
Die erfindungsgemäße optische Anordnung beruht wiederum auf dem Konzept, das Licht einer einzigen Lichtquelle mit Hilfe optischer Mittel zu einem Lichtkegel zu verformen, der sich in einer ersten Richtung weiter erstreckt als in einer zu der ersten Richtung senkrecht verlaufenden zweiten Richtung. Erfindungsgemäß ist nunmehr vorgesehen, dass die optischen Mittel eine der Lichtquelle zugeordnete Linsenanordnung aufweisen, welche bezüglich der zweiten Richtung translations-symmetrisch ausgebildet ist. Ferner sind im Hinblick auf die zweite Richtung zu beiden Seiten der Linsenanordnung zwei Reflektoren mit Reflektionsflächen vorgesehen, welche jeweils im Hinblick auf eine Rotationsachse der Leuchte im Wesentlichen rotations-symmetrisch ausgebildet sind. Es hat sich gezeigt, dass durch den Einsatz derartiger optischer Mittel das Licht der punktförmigen Lichtquelle in besonders effektiver Weise zu dem gewünschten asymmetrischen Lichtkegel verformt werden kann, wobei allerdings die optischen Mittel selbst sehr kompakt ausgestaltet sein können, so dass letztendlich eine Leuchte mit den gewünschten lichttechnischen Eigenschaften in kleiner Bauweise realisiert werden kann.

Gemäß der vorliegenden Erfindung wird dementsprechend eine Leuchte vorgeschlagen, welche eine im Wesentlichen punktförmige Lichtquelle sowie optische Mittel zur Beeinflussung des von der Lichtquelle abgegebenen Lichts aufweist, derart, dass die Erstreckung eines von der Leuchte abgegebenen Lichtkegels in einer ersten Richtung größer ist als in einer zu der ersten Richtung senkrecht verlaufenden zweiten Richtung, wobei erfindungsgemäß vorgesehen ist, dass die optischen Mittel eine der Lichtquelle zugeordnete Linsenanordnung, welche bezüglich der zweiten Richtung translations-symmetrisch ausgebildet ist, sowie zwei - bezüglich der zweiten Richtung - zu beiden Seiten der Linsenanordnung befindliche Reflektoren mit Reflektionsflächen aufweisen, welche jeweils im Hinblick auf eine Rotationsachse im Wesentlichen rotationssymmetrisch ausgebildet sind.

Die Rotationsachsen der beiden Reflektionsflächen verlaufen vorzugsweise parallel zur zweiten Richtung, wobei insbesondere vorgesehen sein kann, dass die Rotationsachsen derart angeordnet sind, dass sie die Lichtquelle schneiden bzw. die Lichtquelle auf der gemeinsamen Rotationsachse angeordnet ist. Die Reflektionsflächen selbst weisen vorzugsweise im Schnitt eine Parabelform auf, wobei der Scheitel der Parabelform in etwa der Position der Lichtquelle entspricht.

Die Begrenzungskanten der Reflektoren können abgerundet sein. Alternativ hierzu wäre allerdings auch eine abgewinkelte Ausgestaltung denkbar.

Die Lichtquelle selbst ist vorzugsweise durch eine LED bzw. ein lichtemittierendes Halbleiterelement gebildet.
Erfindungsgemäß wird im Anspruch 1 eine optische Anordnung zur Beeinflussung des von einer im Wesentlichen punktförmigen Lichtquelle abgegebenen Lichts derart, dass die Erstreckung eines von der Lichtquelle abgegebenen Lichtkegels in einer ersten Richtung größer ist als in einer zu der ersten Richtung senkrecht verlaufenden zweiten Richtung, vorgeschlagen, wobei die optische Anordnung eine Linsenanordnung, welche bezüglich der zweiten Richtung translations-symmetrisch ausgebildet ist, sowie zwei - bezüglich der zweiten Richtung - zu beiden Seiten der Linsenanordnung befindliche Reflektoren mit Reflektionsflächen aufweisen, welche jeweils im Hinblick auf eine Rotationsachse im Wesentlichen rotations-symmetrisch ausgebildet sind.

Nachfolgend soll die Erfindung anhand der beiliegenden Zeichnung näher erläutert werden. Es zeigen:
- Fig. 1: schematisch die Lichtabstrahlcharakteristik der erfindungsgemäßen Leuchte;
- Fig. 2: eine Ansicht der optischen Mittel der erfindungsgemäßen Leuchte von unten;
- Fig. 3: eine seitliche Ansicht der optischen Mittel;
- Fig. 4: eine Schnittdarstellung der Leuchte entlang dem Schnitt A-A von Fig. 2;
- Fig. 5: eine weitere Schnittdarstellung der Leuchte entlang dem Schnitt B-B von Fig. 2;
- Fig. 6: eine erste aus dem Stand der Technik bekannte Lösung zur Realisierung einer asymmetrischen Lichtabstrahlcharakteristik und
- Fig. 7a und 7b: eine weitere aus dem Stand der Technik bekannte Lösung einer Leuchte mit asymmetrischer Lichtabstrahlcharakteristik.

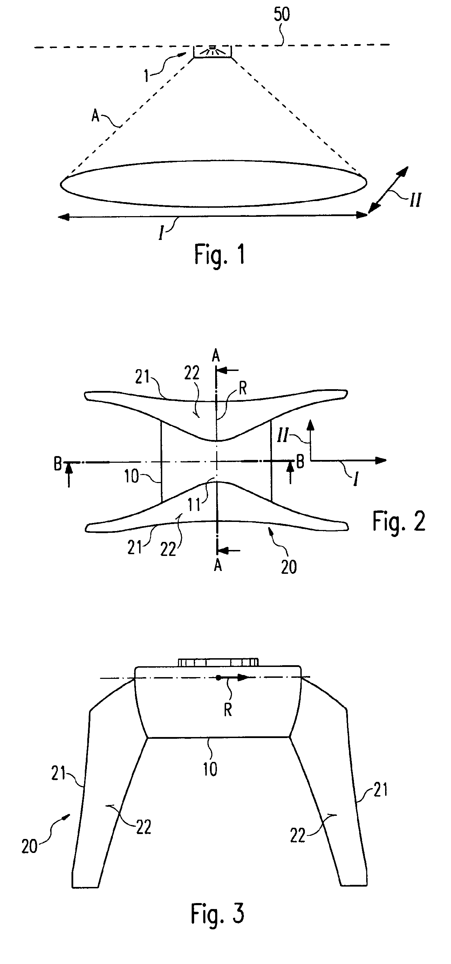

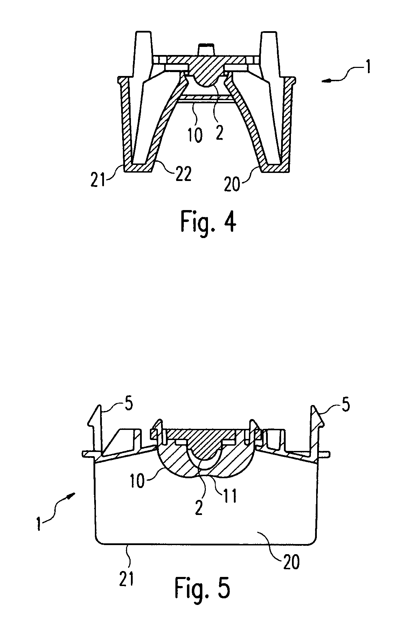

Fig. 1 zeigt zunächst schematisch das Einsatzgebiet der mit dem Bezugszeichen 1 versehenen Leuchte. Diese ist an der Unterseite oder in der Öffnung einer Decke 50 versenkt angeordnet, wobei sich unterhalb der Leuchte 1 ein Bereich, bspw. ein Gang befindet, der als Fluchtweg genutzt werden soll. Im Falle eines Notfalls soll dementsprechend die Leuchte 1 aktiviert werden und diesen Fluchtweg über seine Länge hinweg ausleuchten. Dementsprechend ist keine gleichmäßige Lichtabstrahlung in alle Richtungen erwünscht. Stattdessen soll ein Lichtkegel A geschaffen werden, der sich in einer ersten Richtung I deutlich weiter erstreckt als in einer senkrecht hierzu verlaufenden zweiten Richtung II. Um diese Abstrahlcharakteristik zu ermöglichen, wurde eine spezielle Optik geschaffen, mit deren Hilfe das von einer im Wesentlichen punktförmigen Lichtquelle abgegebene Licht in gewünschter Weise beeinflusst wird. Diese erfindungsgemäße Optik ist den Fig. 2 bis 5 entnehmbar. Die Schnittdarstellungen der Fig. 4 und 5 zeigen hierbei die einzelnen Komponenten der erfindungsgemäßen Leuchte 1, während hingegen die Ansichten der Fig. 2 und 3 in erster Linie die Form der optischen Mittel zur Beeinflussung der Lichtabgabe zeigen.

Gemäß den Darstellungen weist die erfindungsgemäße Leuchte 1 als punktförmige Lichtquelle vorzugsweise eine LED 2 auf, welche auf einer Basisplatine der Leuchte 1 angeordnet ist. Mit Hilfe nicht näher beschriebener Montage- bzw. Halterungsmittel 5 kann die gesamte Anordnung an bzw. in einer Decke montiert werden.

Das von der LED 2 emittierte Licht wird - wie bereits erwähnt - im Wesentlichen durch zwei verschiedene Komponenten in gewünschter Weise beeinflusst, einerseits durch eine Linsenanordnung 10 sowie andererseits durch eine Reflektoranordnung 20.

Die Form der Linsenanordnung 10 kann insbesondere der Schnittdarstellung in Fig. 5 entnommen werden. Die Linsenanordnung 10 ist dementsprechend in etwa kuppelförmig ausgestaltet, weist allerdings im Zentrum oberhalb der LED 2 eine geringe Eindellung 11 auf, wodurch bewirkt werden soll, dass das von der LED 2 abgegebene Licht entlang der ersten Richtung I aufgeweitet wird. Bezüglich der zweiten Richtung II hingegen ist die Linsenanordnung 10 translations-symmetrisch bzw. translations-invariant ausgestaltet, d.h., die Fig. 5 entnehmbare Querschnittsform der Linsenanordnung 10 ändert sich entlang der zweiten Richtung II nicht. Auch dies trägt zu der gewünschten Aufweitung des Lichts in der ersten Richtung I bei.

Die entscheidende Verformung des Lichtbündels zu der in Fig. 1 dargestellten gewünschten asymmetrischen Form erfolgt schließlich durch die Reflektoranordnung 20, welche - im Hinblick auf die zweite Richtung II gesehen - zwei zu beiden Seiten der LED 2 angeordnete Reflektoren 21 mit Reflektionsflächen 22 aufweist. Diese Reflektionsflächen 22 sind im Hinblick auf eine Rotationsachse im Wesentlichen rotations-symmetrisch ausgebildet, wobei die Rotationsachse parallel zur zweiten Richtung II verläuft. Insbesondere kann die Rotationsachse R der Reflektionsflächen 22 - wie in Fig.3 angedeutet -durch das Zentrum der LED 2 verlaufen. Im Schnitt gesehen weisen dabei die Reflektionsflächen 22 - wie in Fig. 4 dargestellt - vorzugsweise eine Parabelform auf, wobei der Scheitel der Parabel wiederum durch die Lichtquelle 2 gebildet ist.

Es hat sich gezeigt, dass durch diese spezielle Ausgestaltung der Reflektionsflächen 22 das von der Lichtquelle 2 abgegebene und durch die Linsenanordnung 10 vorgeformte Licht in besonders effektiver Weise zu dem gewünschten asymmetrischen Lichtkegel verformt werden kann. Dabei besteht ein besonderer Vorteil darin, dass die gesamte Anordnung eine verhältnismäßig geringe Größe einnimmt und dementsprechend eine Leuchte in sehr kompakter Weise geschaffen werden kann.

Die Außenkanten der Reflektoren 21 können - sofern gewünscht - abgerundet sein. Bevorzugt sind sie allerdings wie in Fig. 5 dargestellt abgewinkelt ausgestaltet. Die gesamte Anordnung lässt sich dementsprechend ohne Weiteres in ein transparentes quaderförmiges Gehäuse einfügen.

## Patentansprüche

1. Optische Anordnung zur Beeinflussung des von einer im Wesentlichen punktförmigen Lichtquelle (2) abgegebenen Lichts derart, dass die Erstreckung eines von der Lichtquelle (2) abgegebenen Lichtkegels in einer ersten Richtung (I) größer ist als in einer zu der ersten Richtung (I) senkrecht verlaufenden zweiten Richtung (II),
**dadurch gekennzeichnet,**
**dass** die optische Anordnung aufweist:
a) eine Linsenanordnung (10), welche bezüglich der zweiten Richtung (II) translations-symmetrisch ausgebildet ist, sowie
b) zwei - bezüglich der zweiten Richtung (II) - zu beiden Seiten der Linsenanordnung (10) befindliche Reflektoren (21) mit Reflexionsflächen (22), welche jeweils im Hinblick auf eine Rotationsachse (R) im Wesentlichen rotations-symmetrisch ausgebildet sind.

2. Leuchte (1) mit
einer im Wesentlichen punktförmigen Lichtquelle (2) sowie
einer optischen Anordnung gemäß Anspruch 1.

3. Leuchte nach Anspruch 2,
**dadurch gekennzeichnet,**
**dass** die Rotationsachsen (R) der beiden Reflexionsflächen (22) parallel zur zweiten Richtung (II) verlaufen.

4. Leuchte nach Anspruch 2 oder 3,
**dadurch gekennzeichnet,**
**dass** die Lichtquelle (2) in etwa auf den Rotationsachsen (R) der beiden Reflexionsflächen (22) angeordnet ist.

5. Leuchte nach einem der Ansprüche 2-4,
**dadurch gekennzeichnet,**
**dass** die beiden Reflexionsflächen (22) im Schnitt eine Parabelform aufweisen, wobei der Scheitel der Parabel in etwa der Position der Lichtquelle (2) entspricht.

6. Leuchte nach einem der Ansprüche 2-5,
**dadurch gekennzeichnet,**
**dass** die Begrenzungskanten der Reflektoren (21) abgerundet sind.

7. Leuchte nach einem der Ansprüche 2-5,
**dadurch gekennzeichnet,**
**dass** die Begrenzungskanten der Reflektoren (22) abgewinkelt sind.

8. Leuchte nach Anspruch 7,
**dadurch gekennzeichnet,**
**dass** diese ein quaderförmiges transparentes Gehäuse aufweist.

9. Leuchte nach einem der Ansprüche 2-8,
**dadurch gekennzeichnet,**
**dass** die Lichtquelle (2) durch mindestens eine LED bzw. ein lichtemittierendes Halbleiterelement gebildet ist.

## Claims

1. An optical arrangement for influencing the light emitted by a substantially punctiform light source (2) in such a way that the extension of a light cone emitted by the light source (2) in a first direction (I) is greater than in a second direction (II) extending perpendicularly to the first direction (I),
**characterised in that**
the optical arrangement has:
a) a lens arrangement (10) which is formed in a translationally symmetric manner with respect to the second direction (II), and also
b) two reflectors (21) located - with respect to the second direction (II) - on both sides of the lens arrangement (10) and having reflective surfaces (22) which are each formed so as to be substantially rotationally symmetric with regard to a rotational axis (R).

2. A luminaire (1) having
a substantially punctiform light source (2) and also an optical arrangement in accordance with claim 1.

3. A luminaire according to claim 2,
**characterised in that**
the rotational axes (R) of the two reflective surfaces (22) extend parallel to the second direction (II).

4. A luminaire according to claim 2 or 3,
**characterised in that**
the light source (2) is arranged substantially on the rotational axes (R) of the two reflective surfaces (22).

5. A luminaire according to one of claims 2-4,
**characterised in that**
the two reflective surfaces (22) have, in section, a parabolic form, wherein the vertex of the parabola corresponds substantially to the position of the light source (2).

6. A luminaire according to one of claims 2-5,
**characterised in that**
the limiting edges of the reflectors (21) are rounded off.

7. A luminaire according to one of claims 2-5,
**characterised in that**
the limiting edges of the reflectors (22) are angled off.

8. A luminaire according to claim 7,
**characterised in that**
it has a parallelepipedal transparent housing.

9. A luminaire according to one of claims 2-8,
**characterised in that**
the light source (2) is formed by means of at least one LED or a light-emitting semiconductor element.

## Revendications

1. Système optique destiné à influencer la lumière émise par une source lumineuse (2) de forme sensiblement ponctuelle de manière telle que l'étendue d'un cône lumineux émis par la source lumineuse (2) est plus grande dans une première direction (I) que dans une deuxième direction (II) perpendiculaire à la première direction (I), **caractérisé en ce que**
le système optique comprend :
a) un système de lentilles (10), qui est conçu avec une symétrie de translation par rapport à la deuxième direction (II), ainsi que
b) deux réflecteurs (21) situés des deux côtés du système de lentilles (10) - par rapport à la deuxième direction (II) - et dotés de surfaces de réflexion (22) qui sont conçues chacune sensiblement avec une symétrie de rotation par rapport à un axe de rotation (R).

2. Lampe (1) avec
une source lumineuse (2) de forme sensiblement ponctuelle ainsi qu'avec un système optique selon la revendication 1.

3. Lampe selon la revendication 2,
**caractérisée en ce que**
les axes de rotation (R) des deux surfaces de réflexion (22) sont parallèles à la deuxième direction (II).

4. Lampe selon la revendication 2 ou 3,
**caractérisée en ce que**
la source lumineuse (2) est disposée à peu près sur les axes de rotation (R) des deux surfaces de réflexion (22).

5. Lampe selon l'une quelconque des revendications 2 à 4,
**caractérisée en ce que**
les deux surfaces de réflexion (22) présentent en coupe une forme de parabole, le sommet de la parabole correspondant à peu près à la position de la source lumineuse (2).

6. Lampe selon l'une quelconque des revendications 2 à 5,
**caractérisée en ce que**
les bords de délimitation des réflecteurs (21) sont arrondis.

7. Lampe selon l'une quelconque des revendications 2 à 5,
**caractérisée en ce que**
les bords de délimitation des réflecteurs (22) sont coudés.

8. Lampe selon la revendication 7,
**caractérisée en ce que**
elle-ci comporte un boîtier transparent de forme quadratique.

9. Lampe selon l'une quelconque des revendications 2 à 8,
**caractérisée en ce que**
la source lumineuse (2) est formée par au moins une DEL ou un élément semi-conducteur électroluminescent.
